# EUROPEAN PATENT SPECIFICATION

(11) **EP 0 327 532 B1**
(45) Date of publication and mention of the grant of the patent: **30.06.1993**
(21) Application number: 86906235.6
(22) Date of filing: 21.10.1986
(51) Int. Cl.: B01D 50/00, B04C 9/00

(54) **FILTERING APPARATUS**
FILTRIERANORDNUNG
APPAREIL DE FILTRAGE

(43) Date of publication of application: 16.08.1989
(73) Proprietor: BARNES, Walter Knapp, Embleton, W.A. 6062 (AU); SEPAROVICH, John Michael, Kardinya, W.A. 6163 (AU)
(72) Inventor: BARNES, Walter Knapp, Embleton, W.A. 6062 (AU); SEPAROVICH, John Michael, Kardinya, W.A. 6163 (AU)
(74) Representative: Raynor, Simon Mark
(86) International application number: AU8600319
(87) International publication number: WO8803050

(56) References cited:
- AU-B- 327 161
- AU-B- 1 612 547
- AU-B- 3 713 763
- AU-B- 5 076 164
- GB-A- 851 555
- GB-A- 1 558 008

## Description

This invention relates to an apparatus for, and a method of, separating contaminants from a gaseous flow such as an airstream, which contaminants are entrained in the gaseous flow and may comprise solids, liquids, vapours or other gases including fumes, or any combination thereof.

Known filtering systems for separating contaminants from an air or other gas stream rely on impingement of the contaminants on an arresting surface which may be in the form a screen or a bag filter. These filtering systems have several deficiencies, one of which is that the arrestance efficiency is poor for minute particulates. A further deficiency is that the impingement surface requires frequent cleaning to remove accumulated contaminants thereon. The need to remove the contaminants from the impingement surface is time consuming and introduces the possibility that a portion of the accumulated contaminants may escape to atmosphere. A further deficiency is that the arresting surface is vulnerable to deterioration in circumstances where the contaminants in the gas stream are abrasive. A still further deficiency of such known filtering systems is that the impingement surface is not entirely effective in removing liquid contaminants and fumes.

An industrial gas-cleaning plant is described in GB 851,555, in which water or other liquid is emitted as a downwardly directed wide-angle cone of spray at the mouth of a venturi. Gas is cleaned by passing through the curtain of spray and, with it, through the venturi. The sprayed liquid is removed from the gas by setting the gas into helical motion so that the liquid particles are thrown against the wall of a passage where they run down to pass through a gap into a separate chamber.

It is an object of this invention to provide an apparatus for, and a method of, separating contaminants from a gas stream without relying upon impingement of the gas stream of an arresting surface to effect separation of the contaminants from the gas stream.

According to the present invention there is provided an apparatus for filtering a gas stream to remove liquid or solid particulate contaminants entrained therein, said apparatus including means for intimately contacting the gas with a liquid filter medium to transfer contaminants from the gas to the liquid filter medium thereby forming a liquid filter medium/contaminant mixture, and means for subjecting the filtered gas and liquid filter medium/contaminant mixture to cyclonic action to separate the filtered gas from the liquid filter medium/contaminant mixture, characterised in that the means for intimately contacting the gas with the liquid filter medium comprises a primary cyclone vessel having a wall forming an elongate chamber with a substantially circular cross-section, a delivery means for independently feeding the gas stream and a stream of the liquid filter medium in the same direction into one end of the chamber, means for subjecting the gas and the liquid filter medium to cyclonic action to form a compound vortex in the chamber, and a single outlet means at the other end of the chamber for discharging together from the primary cyclone vessel the filtered gas and the liquid filter medium/contaminant mixture, and the means for subjecting the filtered gas and liquid filter medium/contaminant mixture discharged from the primary cyclone vessel to cyclonic action to separate the gas from the liquid filter medium/contaminant mixture comprises a secondary cyclone vessel arranged to receive the filtered gas and liquid filter medium/contaminant mixture from the single outlet means of the primary cyclone vessel.

The delivery means for injecting liquid filtering medium into the gas stream may comprise at least one jet arranged to inject the liquid in the direction of gas flow whereby the kinetic energy of the liquid intensifies the kinetic energy of the total fluid mass.

The means for intimately contacting the liquid with the gas stream comprises a primary cyclone vessel (which will be referred to hereinafter as a gas-liquid compound cyclone), which subjects the mixture of gas and liquid filtering medium to cyclonic action so as to transfer the contaminants originally in the gas stream into the liquid filter medium.

The gas-liquid compound cyclone is in the form of an elongated chamber through which the gas flows, the chamber having a tangential flow entry or alternatively vanes for causing the flow to rotate. The vanes may be spiral vanes extending along the length of the chamber or axial flow vanes extending across the flow path. When spiral vanes are employed, the chamber is preferably provided in two sections, a descending section and an ascending section each provided with the spiral vanes. In both the axial flow vane arrangement and tangential entry arrangement the chamber converges in the direction of flow, thus increasing the velocity of the rotating fluid mass (which comprises liquid and gas).

In the upper portion of the secondary cyclone vessel, referred to hereinafter as the gas cyclone chamber, the liquid filter medium carrying the contaminants separates from the gas stream under cyclonic action, owing to the difference in the specific gravities of the gaseous fluid and the liquid filter medium respectively. The centrifugal forces on the liquid filter medium also lead to vertical stratification of solid contaminants held in the liquid according to the various specific gravities of the solid contaminants, thereby to effectively prevent further contact of the solid contaminants with the gas stream. As the rotating liquid mass progressively loses its inertial energy and the influence of gravity on the liquid mass progressively increases, the rotating liquid mass gradually descends, while still maintaining the vertical stratification of the contaminants therein owing to the continuing centrifugal forces.

Preferably, the secondary cyclone vessel includes means for extracting gaseous fluid from within the gas cyclone chamber, comprising an outlet having a moisture trap.

The apparatus may include means arranged within the secondary cyclone vessel to receive the separated liquid filter medium/contaminant mixture and operable to concentrate the contaminants within the liquid filter medium/contaminant mixture.

Preferably, a liquid cyclone chamber containing a body of the liquid filtering medium is provided at the bottom of the gas cyclone chamber, the body of liquid preferably being the liquid filtering medium being caused to rotate under the influence the cyclonic action occurring in the cyclone chamber. As the rotating liquid mass in the gas cyclone chamber gradually descends, it finally leaves the gas cyclone chamber and enters the body of liquid in the liquid cyclone chamber. The kinetic energy of the rotating liquid mass imparts rotational force to the body of liquid to generate cyclonic action therein which produces vertical stratification of contaminants in the body of liquid.

To facilitate settling of the contaminants in the body of liquid, there may be provided means to regulate the speed of rotation of a vortex generated by the cyclonic action so as to allow the forces of gravity to exert a greater influence than the centrifugal forces of gyration. The regulating means may comprise baffles or other obstructive elements in the liquid cyclone chamber towards the bottom thereof, so as to facilitate settling of the contaminants through a sedimentation grid into a sedimentation zone in the bottom section of the secondary cyclone vessel.

For the purposes of economy, the liquid filtering medium injected into the gas stream is preferably recirculated, the liquid being withdrawn from the upper central region of the body of liquid at which region the liquid is least contaminated.

From time to time the body of liquid at the bottom of the secondary cyclone vessel may be exchanged or at least the contaminants settling at the bottom of the body of liquid may be drawn-off or dumped and replenishment liquid added.

The present invention further provides a method of filtering a gas stream to remove liquid or solid particulate contaminants entrained therein, wherein the gas stream is intimately contacted with a liquid filter medium to transfer contaminants from the gas stream to the liquid filter medium to form a liquid filter medium/contaminant mixture, and the filtered gas and the liquid filter medium/contaminant mixture are subsequently subjected to cyclonic action to separate the filtered gas from the liquid filter medium/contaminant mixture;
characterised in that the gas stream and a stream of the liquid filter medium are fed independently in the same direction into one end of an elongate chamber of circular cross section, and are subjected to cyclonic action to form a compound vortex in the chamber thereby intimately contacting the gas stream with the liquid filter medium and transferring contaminants from the gas to the liquid filter medium, and the filtered gas and the liquid filter medium/contaminant mixture are discharged from the other end of the chamber through a single outlet.

Advantageously, the filtered gas and the liquid filter medium/contaminant mixture is delivered from the single outlet to a second cavity of circular cross-section and subjected therein to a cyclonic/rotary motion to separate the filtered gas from the liquid filter medium/contaminant mixture, and discharging the filtered gas independently from the second cavity.

The method preferably includes collecting the liquid filter medium/contaminant mixture in the second cavity and discharging the liquid filter medium/contaminant mixture from the lower portion of the second chamber.

The invention will be better understood by reference to the following description of several specific embodiments thereof as shown in the accompanying drawings in which:-
Fig. 1 is a schematic side view of a filtering apparatus according to the first embodiment;
Fig. 2 is a plan view of part of the apparatus of Fig. 1, showing in particular the cyclone separator;
Fig. 3 is a schematic plan view of a filtering apparatus according to a second embodiment; and
Fig. 4 is a schematic elevational view of a filtering apparatus according to a third embodiment.

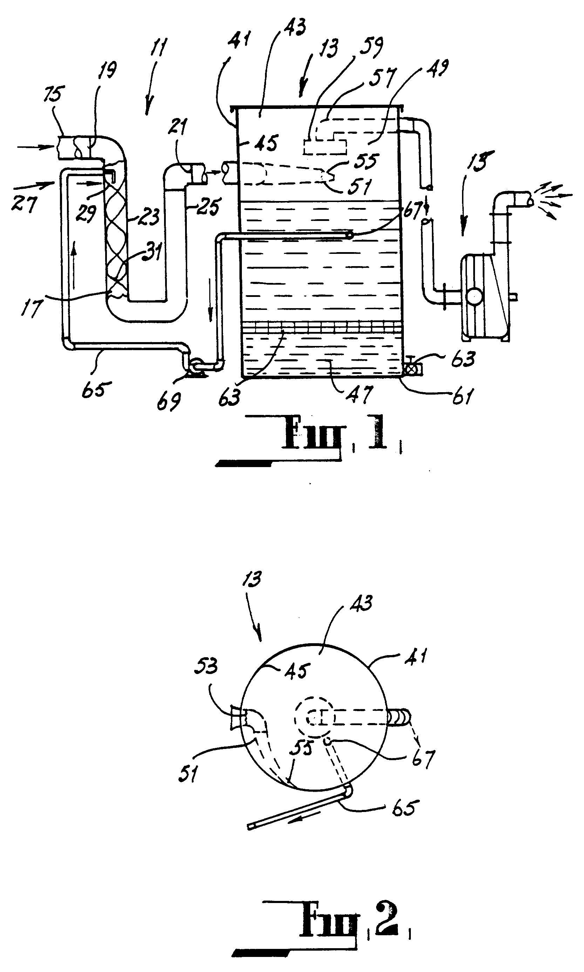

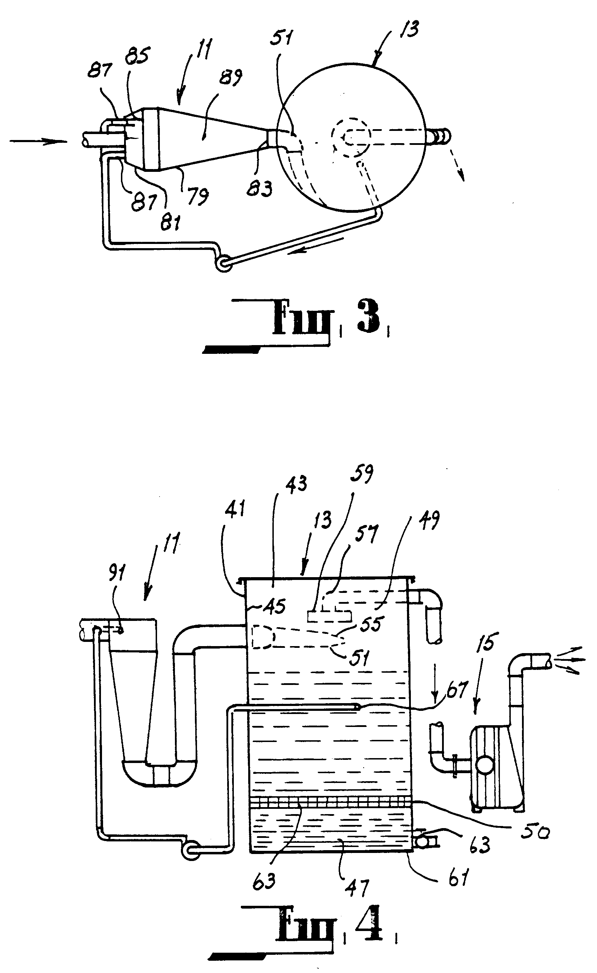

Referring to Figs. 1 and 2 of the drawings, the filtering apparatus according to the first embodiment is incorporated in a vacuum extraction system for use in association with a working tool (such as a portable power saw) for conveying sawdust or other particles produced by the working operation away from the working area. The filtering apparatus according to the invention may, of course, be used in association with any other apparatus employing a vacuum extraction system including commercial and domestic vacuum cleaners and in any other situation where it is necessary to extract contaminants from an air or other gas flow.

The filtering apparatus comprises a gas-liquid compound cyclone 11, a cyclone separator 13 and an exhaustor 15 which subjects the interior of the cyclone separator to reduced pressure. Air carrying dust and other contaminant particles away from the working surface is conveyed to the gas-liquid compound cyclone 11 at which a liquid filtering medium is injected into the air stream and the injected liquid filtering medium is mixed intimately with the air stream so as to absorb the contaminants therein; that is, the contaminants are transferred from suspension in the gas stream to suspension in liquid particles themselves suspended in the gas stream. The air stream carrying the liquid with the contaminants absorbed therein, is then introduced into the cyclone separator 13 at which the liquid with the contaminants absorbed therein, is separated from the air stream. The exhaustor 15 discharges the cleaned air to atmosphere or other suitable point of disposal.

The liquid injected into the air stream may comprise water having one or more additives including wetting agents, dispersants, an emulsifying and anti-foaming agents, germicides, fungicides, insecticides and active chemcial neutralising agents.

The gas-liquid compound cyclone 11 includes a chamber 17 having an inlet 19 to receive contaminanted air and an outlet 21 communicating with the inlet of the cyclone separator 13. The chamber 17 includes first and second elongated sections 23 and 25 respectively connected in series, with the section arranged so as to extend substantially vertically. The first section 23 provided a descending section and the second section 25 provides an ascending section.

The liquid is injected into the air stream by means 27 including a jet 29 communicating with the chamber 17 at the inlet end of the descending section 23 and so arranged as to inject liquid in the direction of air flow.

The gas-liquid compound cyclone 11 further comprises spiral vanes 31 arranged along the inner peripheral surface of the descending section 33 and spiral vanes (not shown) arranged along the inner peripheral surface of the ascending section 25. The spiral vanes are arranged to cause air flowing along the respective sections to rotate so as to establish cyclonic action which facilitates transfer of the contaminants from the air stream to the liquid particles. The spiral vanes in the ascending section 25 are of opposite hand to the spiral vanes in the descending section 23 so as to cause contra-rotation of the air stream and thereby create violent turbulence in the air stream which assists in effecting the transfer of the contaminants into the liquid particles.

The cyclone separator 13 includes a body 41 having a chamber 43, the side wall 45 of which is cylindrical and extends vertically. The chamber 43 contains a body of liquid filter medium 47 in the lower section thereof, the liquid being of the type that is injected into the contaminated air stream at the gas-liquid compound cyclone 11. The intermediate section of the chamber 43 containing the body of liquid 47 constitutes a liquid cyclone chamber 48 and the section above the body of liquid constitutes a gas cyclone chamber 49. The air stream exiting from the outlet 21 of the compound cyclone 11 is introduced into the gas cyclone chamber 49. The bottom section of the chamber 43 provides a sedimentation zone below a sedimentation grid 50.

The gas cyclone chamber 49 is provided with an entry nozzle 51 which receives the mixture exiting from the outlet 21 of the gas-liquid compound cyclone 11 and introduces that mixture tangentially into the cyclone chamber. The entry nozzle 51 has an inlet end 53 which communicates with the outlet 21 of the gas-liquid compound cyclone 11, and an outlet end 55 from which the mixture issues substantially tangentially to the circular side wall of the chamber. The cross-sectional area of the nozzle progressively decreases along the length of the nozzle from the inlet end to the outlet end. The inlet end of the nozzle is circular in section and the outlet end is in the form of an elongated opening extending vertically.

An air outlet 57 is provided in the upper region of the gas cyclone chamber 49. The air outlet is connected to the intake end of the extractor 15 and is provided with a moisture trap 59.

At the bottom of the chamber 45 there is an outlet 61 provided with a valve 63 by means of which the body of water in the liquid cyclone chamber 48 may be changed from time to time.

As will be fully explained hereinafter, the body of liquid within the liquid cyclone chamber 48 is caused to rotate and undergo cyclonic action under the influence of the cyclonic action taking place within the gas cyclone chamber 49. Means in the form of baffles (not shown) or other obstructive elements are provided towards the lower end of the liquid cyclone chamber 48 to regulate the rotational speed of the body of liquid so as to allow settling of contaminants contained in the body of liquid.

Liquid injected into the air stream at the gas-liquid compound cyclone 11 is obtained from the body of liquid in the cyclone separator 13. In this connection, there is a liquid supply line 65 having an inlet 67 opening into the body of liquid and an outlet communicating with the jet 27. A pump 69 is incorporated in the supply line for delivering the liquid to the jet. The inlet end of the supply line is located in the central region of the body of water so as to intake liquid which has a relatively lower level of contamination, as will be explained later.

Operation of the filtering device will now be described. The inlet 19 of the gas-liquid compound cyclone 11 is coupled by way of a flexible conduit 75 to a collecting head (not shown) associated with the power saw or other working tool. The gas cyclone chamber 49 is subjected to a reduced pressure by operation of the exhaustor 15. The reduced pressure within the gas cyclone chamber 49 generates an air flow which commences at the collecting head and flows along the flexible conduit 75, through the gas-liquid cyclone chamber 11 and enters the gas cyclone chamber by way of the entry nozzle 51. The air entering the collecting head gathers dust and other particles produced during operation of the tool and conveys such material pneumatically to the gas-liquid compound cyclone 11 at which the liquid filter medium is injected into the contaminated air stream at the jet 27 and the mixture of liquid particles and contaminated air intimately mixed during cyclonic action occuring in the descending and ascending sections 23 and 25 of the chamber. During the intimate mixing, the contaminants in the air stream are absorbed by the liquid particles. The mixture of air and liquid particles with contaminants absorbed therein, is then conveyed to the cyclone separator 13 and is introduced tangentially into the gas cyclone chamber 49 by the entry nozzle 51. The mixture entering the gas cyclone section is subjected to cyclonic action which causes separation of the air from the liquid particles carrying the contaminants, owing to the difference in the respective specific gravity of the air and the liquid. The liquid clings to the peripheral wall of the gas cyclone chamber developing into a liquid film on the wall and the centrifugal forces on the liquid film leads to vertical stratification of the solid particles held within the liquid film, according to their various specific gravities thereby to effectively prevent further contact between the contaminants and the air stream. As the rotating contaminated liquid mass loses its inertial energy and the influence of gravity on the liquid mass progressively increases, the rotating liquid mass gradually descends, while still maintaining the vertical stratification owing to the continuing centrifugal forces. When the rotating liquid mass enters the body of water in the liquid cyclone chamber 48, the kinetic energy of the rotating liquid film imparts a rotational force to the body of liquid in the liquid cyclone chamber which in turn generates cyclonic action therein. This cyclonic action maintains the vertical stratification of contaminants, initially achieved within the liquid film. The rotational speed of the body of liquid is regulated by the baffles 63 or other obstruction elements so as to allow the forces of gravity to exert a greater influence than the centrifugal forces of gyration on the contaminants so as to facilitate settling thereof through the grid 50 into the sedimentation zone. Because of the vertical stratification in the rotating body of liquid and centripetal forces inherent in cyclonic action, the upper central region of the body develops a zone of relatively uncontaminated liquid and provides a suitable point from which the liquid filter medium may be drawn for injection into the gas-liquid compound cyclone 11.

Air which has separated from the liquid and contaminants in the gas cyclone chamber is now clean and leaves the gas cyclone chamber through the outlet 57 and is conveyed through the exhaustor 15 to atmosphere or other suitable point of disposal.

The body of liquid contained within the liquid cyclone chamber can be exchanged from time to time so that it does not become ineffective owing to a saturation with contaminants. As an alternative to exchanging the entire body of liquid, the contaminated liquid at the bottom may be drawn-off, either continuously or periodically, and replenishment liquid supplied. This facilitates safe disposal of the contaminants as they are contained within liquid discarded to waste.

Referring now to Fig. 3 of the drawings, the second embodiment of the filtering system according to the invention is similar to the first embodiment, apart from the gas-liquid compound cyclone 11. In the second embodiment, the gas-liquid compound cyclone 11 is in the form of an axial inlet cyclone with a cyclone chamber 79 having an inlet end 81 to receive contaminated air and an outlet end 83 which communicates with the entry nozzle 51 of the cyclone separator 13. There is provided within the elongated chamber 79 an assembly of axial flow vanes 85 so arranged as to cause rotary flow of the contaminated air along the chamber. A plurality of jets 87 are provided for injecting liquid axially into the cyclone chamber 79 upstream of the vane assembly 85. The section 89 of the chamber downstream of the vane assembly 85 is convergent and terminates at the outlet end 83. In operation, rotation of the air caused by the vanes 85 results in cyclonic action which intimately mixes the liquid injected into the chamber with the axial air flow therethrough.

Referring now to Fig. 4 of the drawings, the third embodiment of the filtering system is similar to the first embodiment, again apart from the gas-liquid compound cyclone 11. The gas liquid compound cyclone in this embodiment is in the form of a conventional tangential inlet cyclone which may have a gas entry via a spiral casing or a tangential entry nozzle. A jet 91 injects liquid filter medium in the direction of air flow.

From the foregoing description, it is evident that the present invention provides filter apparatus which does not rely on impingement of contaminants in an air stream with an impingement surface, and so does not suffer from the deficiencies of known bag and screen filters.

It will be appreciated that a filtering apparatus according to the present invention may be used in series with conventional bag or screen filters. In addition, a filtering apparatus according to the invention may be adapted for use as a replacement filter in a vacuum cleaning system or other pneumatic conveying system originally fitted with a conventional impingement filter. In such systems where the impingement filter is in the form of a bag filter received within a cannister, the cannister may be modified so as to constitute the chamber of the cyclone separator forming part of the present invention. In this way, it is believed that the present invention may well be suitable as a replacement filter in existing systems.

## Claims

1. A method of filtering a gas stream to remove solid, liquid or gaseous contaminants entrained therein, wherein the gas stream is intimately contacted with a liquid filter medium to transfer contaminants from the gas stream to the liquid filter medium to form a liquid filter medium/contaminant mixture, and the filtered gas and the liquid filter medium/contaminant mixture are subsequently subjected to cyclonic action to separate the filtered gas from the liquid filter medium/contaminant mixture;
characterised in that the gas stream and a stream of the liquid filter medium are fed independently in the same direction into one end of an elongate chamber of circular cross section, and are subjected to cyclonic action to form a compound vortex in the chamber thereby intimately contacting the gas stream with the liquid filter medium and transferring contaminants from the gas to the liquid filter medium, and the filtered gas and the liquid filter medium/contaminant mixture are discharged from the other end of the chamber through a single outlet.

2. A method as claimed in claim 1 wherein the filtered gas and the liquid filter medium/contaminant mixture is delivered from the single outlet to a second chamber of circular cross-section and subjected therein to a cyclonic action to separate the filtered gas from the liquid filter medium/contaminant mixture, and the filtered gas is discharged independently from the second chamber.

3. A method as claimed in claim 2 wherein the liquid filter medium/contaminant mixture is collected in the second chamber and the liquid filter medium/contaminant mixture is discharged from the lower portion of the second chamber.

4. Apparatus for filtering a gas stream to remove solid, liquid or gaseous contaminants entrained therein, said apparatus including means for intimately contacting the gas with a liquid filter medium to transfer contaminants from the gas to the liquid filter medium thereby forming a liquid filter medium/contaminant mixture, and means for subjecting the filtered gas and liquid filter medium/contaminant mixture to cyclonic action to separate the filtered gas from the liquid filter medium/contaminant mixture,
characterised in that the means for intimately contacting the gas with the liquid filter medium comprises a primary cyclone vessel having a wall forming an elongate chamber with a substantially circular cross-section, a delivery means for independently feeding the gas stream and a stream of the liquid filter medium in the same direction into one end of the chamber, means for subjecting the gas and the liquid filter medium to cyclonic action to form a compound vortex in the chamber, and a single outlet means at the other end of the chamber for discharging together from the primary cyclone vessel the filtered gas and the liquid filter medium/contaminant mixture,
and the means for subjecting the filtered gas and liquid filter medium/contaminant mixture discharged from the primary cyclone vessel to cyclonic action to separate the gas from the liquid filter medium/contaminant mixture comprises a secondary cyclone vessel arranged to receive the filtered gas and liquid filter medium/contaminant mixture from the single outlet means of the primary cyclone vessel.

5. Apparatus according to claim 4 including means arranged within the secondary cyclone vessel to receive the separated liquid filter medium/contaminant mixture and operable to concentrate the contaminants within the liquid filter medium/contaminant mixture.

6. Apparatus according to claim 5 wherein the means for concentrating the contaminants within the liquid filter medium/contaminant mixture subjects the mixture to a rotary motion and includes means to regulate the speed of rotation of the mixture to allow gravity settling of the contaminants.

## Patentansprüche

1. Ein Verfahren des Filterns eines Gasstromes zum Entfernen von darin mitgeführten festen, flüssigen oder gasförmigen Verunreinigungen, bei dem der Gasstrom in innigen Kontakt mit einem flüssigen Filtermedium gebracht wird zum Transferieren von Verunreinigungen aus dem Gasstrom auf das flüssige Filtermedium zum Bilden eines Flüssigfiltermedium/Verunreinigungsgemisches, und wobei das gefilterte Gas und das Flüssigfiltermedium/Verunreinigungsgemisch danach einer Zykloneinwirkung unterworfen werden zum Abtrennen des gefilterten Gases aus dem Flüssigfiltermedium/Verunreinigungsgemisch,
dadurch gekennzeichnet, daß der Gasstrom und ein Strom des Flüssigfiltermediums voneinander unabhängig in gleicher Richtung in ein Ende einer langgestreckten Kammer mit rundem Querschnitt eingeführt werden und der Zykloneinwirkung unterworfen werden zum Bilden eines Verbundwirbels in der Kammer, wodurch der Gasstrom in innigen Kontakt mit dem Flüssigfiltermedium gebracht wird und Verunreinigungen aus dem Gas auf das Flüssigfiltermedium übertragen werden, und daß das gefilterte Gas und das Flüssigfiltermedium/Verunreinigungsgemisch aus dem anderen Ende der Kammer durch eine einzige Öffnung ausgetragen werden.

2. Ein Verfahren nach Anspruch 1, bei dem das gefilterte Gas und das Flüssigfiltermedium/Verunreinigungsgemisch aus dem einzigen Austritt in eine zweite Kammer runden Querschnitts überführt werden und in dieser einer Zykloneinwirkung unterworfen werden zum Abtrennen des gefilterten Gases von dem Flüssigfiltermedium/Verunreinigungsgemisch, und daß das gefilterte Gas unabhängig aus der zweiten Kammer ausgetragen wird.

3. Ein Verfahren nach Anspruch 2, bei dem das Flüssigfiltermedium/Verunreinigungsgemisch in der zweiten Kammer gesammelt wird und das Flüssigfiltermedium/Verunreinigungsgemisch aus dem unteren Abschnitt der zweiten Kammer ausgetragen wird.

4. Vorrichtung zum Filtern eines Gasstromes zum Entfernen von darin mitgeführten festen, flüssigen oder gasförmigen Verunreinigungen, welche Vorrichtung Mittel umfaßt für das innige Kontaktieren des Gases mit einem Flüssigfiltermedium zum Übertragen von Verunreinigungen aus dem Gas auf das Flüssigfiltermedium, wodurch ein Flüssigfiltermedium/Verunreinigungsgemisch gebildet wird, und Mittel für das Unterwerfen des gefilterten Gases und des Flüssigfiltermedium/Verunreinigungsgemisches einer Zykloneinwirkung zum Trennen des gefilterten Gases von dem Flüssigfiltermedium/Verunreinigungsgemisch,
dadurch gekennzeichnet, daß die Mittel für das innige Kontaktieren des Gases mit dem Flüssigfiltermedium einen primären Zyklonkessel umfassen mit einer Wandung, die eine langgestreckte Kammer mit einem im wesentlichen runden Querschnitt bildet, ein Einsetzmittel für das unabhängige Einführen des Gasstromes und eines Stromes des Flüssigfiltermediums in derselben Richtung in ein Ende der Kammer, Mittel für das Unterwerfen des Gases und des Flüssigfiltermediums einer Zykloneinwirkung zum Bilden eines Verbundwirbels in der Kammer, und ein einziges Auslaßmittel am anderen Ende der Kammer für den gemeinsamen Austrag des gefilterten Gases und des Flüssigfiltermedium/Verunreinigungsgemisches aus dem primären Zyklonkessel,
und die Mittel für das Unterwerfen des gefilterten Gases und Flüssigfiltermedium/Verunreinigungsgemisches, ausgetragen aus dem primären Zyklonkessel, einer Zykloneinwirkung zum Abtrennen des Gases von dem Flüssigfiltermedium/Verunreinigungsgemisch, einen sekundären Zyklonkessel umfassen, angeordnet zum Empfang des gefilterten Gases und des Flüssigfiltermedium/Verunreinigungsgemisches aus dem einzigen Auslaßmittel des primären Zyklonkessels.

5. Vorrichtung nach Anspruch 4 einschließlich Mitteln, die innerhalb des zweiten Zyklonkessels angeordnet sind zum Empfang des abgetrennten Flüssigfiltermedium/Verunreinigungsgemisches und betreibbar zum Konzentrieren der Verunreinigungen innerhalb des Flüssigfiltermedium/Verunreinigungsgemisches.

6. Vorrichtung nach Anspruch 5, bei der die Mittel für das Konzentrieren der Verunreinigungen innerhalb des Flüssigfiltermedium/Verunreinigungsgemisches das Gemisch einer Rotationsbewegung unterwerfen und Mittel umfassen zum Regulieren der Geschwindigkeit der Rotation des Gemisches zum Ermöglichen des Schwerkraftabsetzens der Verunreinigungen.

## Revendications

1. Procédé de filtration d'un courant de gaz pour extraire des contaminants solides, liquides ou gazeux, entraînés dans ce courant, dans lequel le courant de gaz est mis en contact intime avec un agent filtrant liquide afin de transférer les contaminants provenant du courant de gaz à l'agent filtrant liquide pour former un mélange d'agent filtrant liquide et de contaminants, et le gaz filtré et le mélange d'agent filtrant liquide et de contaminants est ensuite soumis à un effet de cyclone pour séparer le gaz filtré du mélange d'agent filtrant liquide et de contaminants;
caractérisé en ce que le courant de gaz et un courant de l'agent filtrant liquide sont amenés indépendamment dans le même sens dans une extrémité d'une chambre allongée de section transversale circulaire, et sont soumis à un effet de cyclone pour former un tourbillon composé dans la chambre, mettant ainsi le courant de gaz en contact intime avec l'agent filtrant liquide et transférant les contaminants du gaz à l'agent filtrant liquide, et le gaz filtré et le mélange d'agent filtrant liquide et de contaminants sont évacués par l'autre extrémité de la chambre par l'intermédiaire d'un orifice de sortie unique.

2. Procédé suivant la revendication 1, dans lequel le gaz filtré et le mélange d'agent filtrant liquide et de contaminants sont distribués par l'orifice de sortie unique à une seconde chambre de section transversale circulaire et sont soumis dans celle-ci à un effet de cyclone afin de séparer le gaz filtré du mélange d'agent filtrant liquide et de contaminants, et le gaz filtré est évacué indépendamment depuis la seconde chambre.

3. Procédé suivant la revendication 2, dans lequel le mélange d'agent filtrant liquide et de contaminants est recueilli dans la seconde chambre et est évacué depuis la partie inférieure de la seconde chambre.

4. Appareil pour filtrer un gaz afin d'en extraire des contaminants solides, liquides ou gazeux entraînés dans ce courant, cet appareil comprenant des moyens pour mettre le gaz en contact intime avec un agent filtrant liquide pour transférer des contaminants du gaz à l'agent filtrant liquide, formant ainsi un mélange d'agent filtrant liquide et de contaminants, et des moyens pour soumettre le gaz filtré et le mélange d'agent filtrant liquide et de contaminants à un effert de cyclone pour séparer le gaz filtré de ce mélange,
caractérisé en ce que les moyens pour mettre le gaz en contact intime avec l'agent filtrant liquide comprennent un récipient formant un cyclone primaire ayant une paroi formant une chambre allongée ayant une section transversale à peu près circulaire, un dispositif de distribution pour distribuer indépendamment le courant de gaz et un courant de l'agent filtrant liquide dans le même sens dans une extrémité de la chambre, des moyens pour soumettre le gaz et l'agent filtrant liquide à un effet de cyclone afin de former dans la chambre un tourbillon composé, et un orifice de sortie unique à l'autre extrémité de la chambre pour évacuer ensemble depuis le récipient formant un cyclone primaire le gaz filtré et le mélange d'agent filtrant liquide et de contaminants,
et en ce que les moyens pour soumettre le gaz filtré et le mélange d'agent filtrant liquide et de contaminants évacué du récipient formant un cyclone primaire à un effet de cyclone pour séparer le gaz du mélange d'agent filtrant liquide et de contaminants, comprennent un second récipient formant un cyclone secondaire agencé pour recevoir le gaz filtré et le mélange d'agent filtrant liquide et de contaminants en provenance de l'orifice de sortie unique du récipient formant le cyclone primaire.

5. Appareil suivant la revendication 4, comprenant des moyens agencés à l'intérieur du récipient formant le cyclone secondaire afin de recevoir le mélange d'agent filtrant liquide et de contaminants et agissant pour concentrer les contaminants dans le mélange d'agent filtrant liquide et de contaminants.

6. Appareil suivant la revendication 5, dans lequel les moyens pour concentrer les contaminants dans le mélange d'agent filtrant liquide et de contaminants soumettent le mélange à un mouvement de rotation et comprennent des moyens pour régler la vitesse de rotation du mélange afin de permettre le dépôt des contaminants par gravité.
